# EUROPEAN PATENT SPECIFICATION

(11) **EP 4 013 821 B1**
(45) Date of publication and mention of the grant of the patent: **23.04.2025**
(21) Application number: 20764794.2
(22) Date of filing: 12.08.2020
(51) Int. Cl.: C08L 29/04, C08K 3/16

(54) **COMPOSITES AND USES THEREOF**
VERBUNDSTOFFE UND VERWENDUNGEN DAVON
COMPOSITES ET LEURS UTILISATIONS

(30) Priority: 12.08.2019 US 201962885575 P
(43) Date of publication of application: 22.06.2022
(73) Proprietor: Solutum Technologies Ltd, Tel Aviv 6761304 (IL)
(72) Inventor: BARAK, Sharon, Tel Aviv 6617717 (IL); KREPKER, Max, Tirat Carmel 3907841 (IL); BEN-ZVI BECHLER, Regev, Rehovot 7630602 (IL)
(74) Representative: Fleuchaus & Gallo Partnerschaft mbB
(86) International application number: PCT/IL2020/050886
(87) International publication number: WO 2021/028918

(56) References cited:
- WO-A1-2007/049952
- WO-A1-2012/131370
- WO-A2-2011/080206
- US-A1- 2008 110 370

## Description

### TECHNOLOGICAL FIELD

The invention generally concerns methods for the manufacture of polymeric composites and uses thereof.

### BACKGROUND

Polymers and products made therefrom form a significant part of municipal solid waste. These materials are virtually non-biodegradable with some being difficult to recycle. While it is the general desire of manufacturers to produce biodegradable materials that will contribute to sustainability and reduction in the environmental impact associated with disposal of such polymers, extremely large amounts of contaminating polymers are still manufactured and disposed of.

Over the years, researchers have attempted to produce polymer compositions that were not only functional, namely having certain desired properties, but also safe with limited or diminished environmental impact. These attempts are described, for example, in any of references [1] through [24] below.

### BACKGROUND ART

[1] International Patent Publication No. WO07/010553;
[2] International Patent Publication No. WO13/029018;
[3] Japan Patent Application No. 2009091011;
[4] International Patent Publication No. WO17/214187;
[5] International Patent Publication No. WO13/044266;
[6] Japan Patent Application No. 4265200;
[7] International Patent Publication No. WO04/037919;
[8] International Patent Publication No. WO16/083667;
[9] International Patent Publication No. WO14/003369;
[10] International Patent Publication No. WO11/098122;
[11] International Patent Publication No. WO06/117801,
[12] International Patent Publication No. WO06/082471;
[13] International Patent Publication No. WO02/053640;
[14] International Patent Publication No. WO02/053610;
[15] International Patent Publication No. WO07/049952;
[16] International Patent Publication No. WO15/142564;
[17] International Patent Publication No. WO03/082970;
[18] International Patent Publication No. WO91/02023;
[19] International Patent Publication No. WO15/145457;
[20] International Patent Publication No. WO17/112878;
[21] International Patent Publication No. WO95/20013;
[22] International Patent Publication No. WO04/074367;
[23] International Patent Publication No. WO07/015261;
[24] US Patent No. 7,993,738.
[25] International Patent Publication No. WO 2007/049952 A1

### GENERAL DESCRIPTION

The inventors of the technology disclosed herein have developed a novel methodology for modifying properties of raw materials in order to replace plastics and other long-degrading polymers with new materials which decomposition may be pre-tailored. Composites of the invention offer a range of final products, all constructed based on a selection of materials, which, when combined in accordance with the invention, offer final composites with preselected and unique mechanical properties. The ability to tailor composites or products with a predetermined lifespan, namely the ability to determine at a time of production how quick the composites or products would degrade, is an essential feature of the technology disclosed herein. By selecting the appropriate sets of manufacturing parameters, including material compositions, material amounts, processing conditions and so forth, a product having a predetermined lifespan may be tailored. Such products will decompose upon, e.g., coming into contact with water, or will naturally deteriorate after a predesigned period of time, leaving behind less then toxic degradation products, which at times can be easily taken up by naturally existing microorganisms.

In most general terms, the invention provides a composite as set out in the appended claims (i.e., a raw material or a product) comprising a collection of polymeric and non-polymeric materials, in a combination or an amount that endows the composite with a variety of properties. By tuning the amount of any of PVOH, the crosslinking moiety and the bioplastic, the properties can be further tailored. Such properties include OTR and/or gas transmittance rate, water solubility (or water degradation), thermal stability, heat sealing, and mechanical properties such as tensile strength, Young's Modulus, maximal elongation, flexibility, rigidity, shrinking or stretching characteristics, and others.

As disclosed herein, a ***composition*** according to the invention is a collection of ingredients, as disclosed, that are in a form (composition and amounts) suitable to undergo chemical treatment to provide a solid ***composite.*** While the composite is based on and contains the components of the composition from which it is derived, in a composite, some of the components may be in a reacted or crosslinked form. A composite of the invention may be provided as a raw material, as a masterbatch, in a partially processed form or in the form of final products. Non-limiting examples of composite forms include masterbatch, granulated raw material, powder raw materials, fibers, sheets of any thickness, polymeric blocks and any final product form.

Thus, in a first of its objects, the invention according to claim 1 provides a composition comprising
**A-** poly(vinyl alcohol) (PVOH) in an amount ranging between 30 and 99 wt%;
**B-** at least one crosslinking compound being present in an amount ranging between 0.1 and 20 wt%, and selected from polymers, copolymers and nonpolymeric materials, each having a functionality capable of associating to the PVOH, wherein said functionality is a carboxylic acid selected from dicarboxylic acids, tricarboxylic acids and higher homologues;
**C-** at least one additional bioplastic that is a biodegradable polymer in an amount ranging between 0.1 and 50 wt%, wherein the at least one additional bioplastic is selected from poly(ethylene oxide) (PEO), poly(ethylene glycol) (PEG), polycaprolactone (PCL), poly(lactic acid) (PLA), cellulose and cellulose derivatives, starch, thermoplastic starch (TPS), chitosan and polyhydroxyalkanoates (PHAs); and
**D-** optionally at least one additive in an amount ranging between 0.1 and 20 wt%.

Poly(vinyl alcohol) (PVOH) is a highly hydrophilic water-soluble polymer. The degree of hydroxylation determines its physical, chemical and mechanical properties, wherein the lower the number of residual acetate groups, the lower its water solubility and the higher its glass transition temperature. The degree of hydroxylation also affects the maximal moisture uptake which acts as a plasticizer and thus affects the mechanical and physical properties of the polymer. With increasing water uptake, the tensile strength, modulus of elasticity and hardness are reduced, while impact resistance and elongation at break are greatly increased. Any form of PVOH is encompassed within the invention disclosed herein.

Films made from PVOH have good heat-sealing properties, excellent barrier properties to gases such as oxygen and carbon dioxide and are biocompatible, biodegradable and nontoxic. The films are, however, highly hydrophilic and are highly susceptible to water-derived decomposition, which makes them substantially impractical. To endow the PVOH with desired mechanical properties, while controlling rate of decomposition upon exposure to water, compositions of the invention further contain one of more additive or material, in a specified amount or in a specified material ratio that alters the properties of PVOH and endows a composition or a composite made therefrom with one or more desired properties.

The at least one crosslinking compound is a compound capable of associating to or crosslinking with PVOH. As indicated, the crosslinking compound is selected from polymers, copolymers and nonpolymeric materials, each of which having a functionality capable of associating to the PVOH backbone or to any functionality present thereon.

The at least one crosslinking compound is a polymer or an oligomer capable of crosslinking or associating to PVOH. The crosslinking or association to the PVOH is typically chemical in nature, namely through the formation of covalent bonds. In other instances, the association may be physical, namely wherein chains of the polymers entangle. Notwithstanding the type of association, the crosslinking molecule is selected to provide an association which results in desired physico-mechanical properties.

The crosslinking compound is one having a functionality capable of associating with the PVOH. Such functionality may be an inherent functionality of the polymer or a functionality that is grafted or associated or appended with the polymer to afford crosslinking capabilities. According to the invention, the functionality is selected from carboxylic acids.

The polymer may be selected amongst ionomers, namely polymers having a functionality capable of forming an ionic group. In some embodiments, the ionomer is a polyacid optionally selected from poly(acrylic acid) (PAA), poly(methacrylic acid) (PMAA).

The crosslinking compound is a polymer having carboxylic acid functionalities. In some embodiments, the polymer is selected from poly(ethylene-co-acrylic acid) (PE-co-AA), poly(ethylene-co-methacrylic acid) (PE-co-MAA), poly(lactide-block-acrylic acid) (PLA-block-AA), PVOH with carboxylic groups, carboxymethyl cellulose (CMC).

In some embodiments, the polymer is poly(ethylene-co-acrylic acid).

In some embodiments, the at least one crosslinking compound is a copolymer.

In some embodiments, the crosslinking compound is a low-molecular crosslinking compound that is not a polymer, an oligomer or a copolymer. The compound is typically selected amongst carboxylic acid compounds, e.g., a compound having one or more carboxylic acid functionalities.

In some embodiments, the carboxylic acid compound is selected amongst monocarboxylic acids, dicarboxylic acids, tricarboxylic acids and higher homologues. These carboxylic acids may alternatively be selected based on the number of carboxylate or basic groups they can form. Thus, in an equivalent fashion, these compounds may be selected amongst monobasic acids, dibasic acids, tribasic acids and higher homologues. It is further described, the carboxylic acid compound is selected from citric acid, boric acid, humic acid, phthalic acid, terephthalic acid, malic acid, sulfo-succinic acid, isophthalic acid, aconitic acid.

The additional bioplastic (or simply "the bioplastic") used in accordance with the invention is a polymer that is different from the other polymeric components used in the compositions, all of which being substantially also bioplastics. The additional bioplastic may be represented by a natural polymer that is produced or derived from natural sources, such as cells of living organisms, plants and other natural sources. Such polymers may be fully natural or partially synthetic, namely derived from nature and chemically modified to structurally modify the natural polymer. The bioplastic used in accordance with the invention may be also represented by a biodegradable or compostable polymer which is partially or fully derived from petrochemical sources.

In some embodiments, the additional bioplastic is selected from polypeptides and polysaccharides.

In some embodiments, the additional bioplastic is selected from aliphatic or aromatic polyesters, co-polyesters or polyesteramides.

In some embodiments, the additional bioplastic is selected from poly(ethylene oxide) (PEO), poly(ethylene glycol) (PEG), polycaprolactone (PCL), poly(lactic acid) (PLA), cellulose and cellulose derivatives, starch, thermoplastic starch (TPS), chitosan, polyhydroxyalkanoates (PHAs) such as polyhydroxybutyrate (PHB).

The cellulose derivative is a crystalline derivative thereof or any other amorphic form of such a material. Non-limiting examples include nanocrystalline cellulose (NCC), microfibrillar cellulose, bacterial cellulose, hydroxypropylmethyl cellulose (HPMC), hydroxypropyl cellulose (HPC), hydroxyethyl cellulose (HEC) and carboxymethyl cellulose (CMC).

In some embodiments, the additional bioplastic is PEO.

In some embodiments, the additional bioplastic is PCL.

In some embodiments, the additional bioplastic is PEG.

In some embodiments, the composition comprises both PEO and PCL.

In some embodiments, the composition comprises PVOH, PAA, PEO and optionally PCL.

The at least one additive used in compositions of the invention may be selected amongst inorganic additives, fillers or reinforcing agents and from low-molecular weight additives (having a molecular weight below 1000 Da) for improving various properties such as processing aid, slip agents, light stabilizers, UV absorbers, flame retardants, antimicrobial, antiviral, blowing agents, nucleating agents, antioxidants, antiblocking agents, antistatic agents.

It is further described, the additive is a hygroscopic agent. Such agents may be selected from CaO, CaCl₂, LiCl, NaCl, CaI₂, MgCl₂, TiO₂, CaCO₃, alumina silicate fillers, SiO₂. Further, the additive is CaO.

According to the inventors, the additive is an inorganic salt comprising a metallic or a non-metallic element. It is further described, the inorganic salt is an inorganic salt of a metal selected from alkali metals and alkaline metals. Further, the inorganic salt is a salt of a transition metal. Non-limiting examples of inorganic salts include halide salts of a metal selected from Li, K, Ca, Na, Mg, Mn, Zn and others. The inorganic salts are typically halide salts (a halide atom being an anion of the metal cation). In some embodiments, the inorganic salt is selected from LiCl, NaCl, CaCl₂, CaI₂ and MgCl₂. Further, the inorganic salt is CaCl₂.

In some embodiments, a composition used in accordance with the invention comprises poly(vinyl alcohol) (PVOH), poly(ethylene oxide) (PEO) and poly(acrylic acid) (PAA). The composition may be treated to include one or more additional components selected mainly from inorganic salts, cellulose-derived substances and chitosan.

The inorganic salt utilized in modifying properties of the solid composites of the invention, may be any salt form of a metallic or non-metallic element. It is further described, the inorganic salt is an inorganic salt of a metal selected from alkali metals and alkaline metals. Further, the inorganic salt is a salt of a transition metal. Non-limiting examples of inorganic salts include halide salts of a metal selected from Li, K, Ca, Na, Mg, Mn, Zn. The inorganic salts are typically halide salts (a halide atom being an anion of the metal cation). Further, the inorganic salt is selected from LiCl, NaCl, CaCl₂, CaI₂ and MgCl₂. In some embodiments, the inorganic salt is CaCl₂.

The cellulose-derived substance is any such material that comprises or is based on cellulose or cellulose derivatives. It is further described, the cellulose-derived substance is cellulose or a crystalline structure thereof such as nanocrystalline cellulose (NCC), microfibrillar cellulose and bacterial cellulose. Further, the cellulose-derived material is selected from hydroxypropylmethyl cellulose (HPMC), hydroxypropyl cellulose (HPC), hydroxyethyl cellulose (HEC) and carboxymethyl cellulose (CMC).

By selecting material compositions from the material families disclosed herein at least one property of a solid polymeric material may be modulated during its manufacturing process. The property that can be modulated is a mechanical property, a chemical property or a physical property, selected from water degradation, gas permeation, rigidity, flexibility and elasticity. More specifically, the properties that can be modulated may be regarded as water dissolution or water degradation, oxygen transmission rate (OTR) and/or gas transmittance rate, thermal stability, heat sealing, and mechanical properties such as tensile strength, Young's Modulus, maximal elongation, flexibility, rigidity, shrinking or stretching characteristics.

Oxygen transmission rate (OTR) is a measurement of the amount of oxygen gas that passes through a solid composite according to the invention, over a given period of time, at a measured temperature. Permeation of gases other than oxygen may also be prevented when increasing the amount of PVOH. Such other gases may be for example carbon dioxide.

In some embodiments, the amount of the PVOH, the amount of the at least one crosslinking compound and the amount of the at least one additional bioplastic is selected to modulate water degradation of a composite formed of said composition.

As stated above, the ability to tailor composites with predetermined lifespans, namely with the ability to determine how quick they degrade, or putting it differently, how long they can maintain contact with humidity or wetness before they degrade, is an essential feature of the technology disclosed herein. Composites of the invention may be made to be more or less sensitive to hydro-decomposition by controlling the amount of the crosslinking materials and/or the additional bioplastics utilized, e.g., PAA and/or PEO or a cellulose-derived material. As used herein, ***"water degradation"*** suggests a partial or complete dissociation of a solid composite made from compositions of the invention, when the composite is in contact with water. In some instances, a composite of the invention may be stable to hydro-degradation over a period of time but will begin to deteriorate after that period of time expires. This is regarded herein as the product ***lifespan.*** Other products will be easily degraded in water only if contacted with water for a certain period of time. Such products may be regarded as having a chemical self-destructive switch, which can be triggered by exposing the composite to water.

Water degradation may result in the dissociation of the composite into segments that can be easily broken down and can be further water degraded or chemically digested by natural microorganisms. In accordance with the invention, the stability to water may be tested, verified or determined based on any such assay known in the art. In some It is further described, one or more of the following may be used:
1- determine decomposition time or rate to full dissolution while stirring in water at room temperature;
2- determine decomposition time or rate to full dissolution while stirring in water at a temperature higher than room temperature; or
3- biodegradation tests.

For example, the rate of water degradation of a composite of the invention was determined as the time needed for dissolution or degradation of the composite, in sink conditions at all times, namely under conditions where the concentration of the composite dissolved in water was negligible in comparison to the amount of water (three orders of magnitude), under accelerated conditions and agitation at ambient temperature. Composites containing between 0.4 and 0.55 wt% PAA showed a rate of degradation of ~1 mg/(min x cm²). Composites containing between 0.6 and 1.4 wt% PAA showed a rate of water degeneration of ~0.2 mg/(min x cm²).

It is further described, water degradation is increased with an increase in the amount of the at least one additional bioplastic relative to the amount of said at least one crosslinking material.

It is further described, water degradation is arrested or slowed down or delayed with a decrease in the amount of said at least one additional bioplastic relative to the amount of said at least one crosslinking material.

It is further described, the at least one crosslinking material and the at least one additional bioplastic are present at a ratio of about 1:5, respectively. In some embodiments, the ratio is 1:5 PAA:PEO.

It is further described, the ratio is 2:8. The ratio may be 2:8, PAA:PEO.

It is further described, the ratio between the amount of PEO and PAA combined to PVOH is 2:98, respectively. In other embodiments, the ratio between PEO and PAA combined to PCL and PVOH is 2:5:93, PEO/PAA:PCL:PVOH.

Alternatively or additionally, in compositions of the invention, the amount of the at least one crosslinking material may be between 0.4 and 0.5 wt%, or between 0.9 and 1.1 wt%.

The mechanical properties of flexibility, rigidity and elongation may be similarly tailored by selecting an appropriate relative amount of PEO, PAA, cellulose and/or at least one inorganic salt. As known in the art, a composite flexibility or pliability is a measurement of the product's stiffness. The more flexible the product is, the less stiff it is. Flexibility is measured as the composite's resistance to deformation in response to a force applied to the composite. When the amount of PAA is increased relative to other components in the core formulation, the product becomes stiffer and less prone to elongation.

**Table 1** provides an exemplary list of compositions according to the invention. As one may note, each composition may comprise a predefined amount(s) of the materials that endow composites made therefrom with desired properties (as shown in **Table 2).**

An exemplary composite comprising 1% PAA and 5% of a cellulose material, demonstrated a sealing temperature that was lower as compared with a composite comprising 1.5% PAA and 1% of the cellulose material. Similarly, a composite comprising 1% PAA and 5% of a cellulose material, demonstrated a faster water decomposition time (decomposition within 10-15 minutes, as measured under stirring at RT) as compared with a composite comprising 1.5% PAA and 1% of the cellulose material which showed a medium range decomposition time (decomposition between 20-25 minutes, as measure under stirring at RT).

Composites comprising an amount of PAA ranging from 0.1 and 2wt%, can be tailored to be more or less susceptible for water decomposition. The more PAA is present (namely an amount that is closer to the 2wt% limit), the slower is the observed water decomposition. Smaller amounts of PAA (namely an amount that is close to the 0. 1wt% limit) enable a faster water decomposition.

In a similar fashion, composites comprising an amount of PEO ranging from 1 and 10 wt%, can be tailored to be more or less susceptible for water decomposition. The more PEO is present (namely an amount that is closer to the 10 wt% limit), the faster is the observed water decomposition.

**Table 1- exemplary compositions of the invention.**

| **Component** | **PVOH** | **PAA** | **PEO** | **Chitosan** | **Salt, e.g., CaCl₂** | **Cellulose material, e.g., HPMC** |
|---|---|---|---|---|---|---|
| **Composition 1** | 73-96.5wt% | 0.1-1.5wt% | 1.5-10wt% | 0.1-5wt% | 0.1-5wt% | 0.5-5wt% |
| **Composition 2** | 68.5-89.8wt% | 0.1-1.5wt% | 5-10wt% | 0.1-5wt% | 5-10wt% | 0-5wt% |
| **Composition 3** | 77.5-96.3wt% | 1.5-2.5wt% | 1.5-5wt% | 0.1-5wt% | 0.1-5wt% | 0.5-5wt% |
| **Composition 4** | 67.5-91.5wt% | 1-2.5wt% | 1.5-5wt% | 1.5-10wt% | 5-10wt% | 0.5-5wt% |
| **Composition 5** | 72-95wt% | 1.5-4wt% | 1.5-4wt% | 1.5-10wt% | 0.1-5wt% | 0.5-5wt% |
| **Composition 6** | 71-85wt% | 1wt% | 5wt% | 1.5-10wt% | 5-10wt% | 3wt% |
| **Composition 7** | 81-90wt% | 1.5-2wt% | 2wt% | 0.1-5wt% | 0.1-5wt% | 5wt% |
| **Composition 8** | 68-81wt% | 1.5-2wt% | 5wt% | 1.5-10wt% | 5-10wt% | 5wt% |
| **Composition 9** | 75-84wt% | 5wt% | 5wt% | 0.1-5wt% | 0.1-5wt% | 5wt% |
| **Composition 10** | 60-78wt% | 5wt% | 10wt% | 1.5-10wt% | 5-10wt% | 0.5-5wt% |

As **Tables 1** and **2** demonstrate, with an increase in three relative amounts of PAA (See **Table 1),** the sealing temperature (namely the temperature necessary to adhere two polymeric materials) increases (see **Table 2)** and water degradation is delayed. With increasing amounts of PEO, water degradation is hastened (fast under stirring at RT).

**Table 2- effect of increasing amount of PVOH on composites produced from compositions of the invention listed in Table 1.**

| **Component** | **Water degradation** | **Sealing temperature** |
|---|---|---|
| **Composition 1** | Fast | Medium |
| **Composition 2** | Fast | Medium |
| **Composition 3** | Medium | Medium |
| **Composition 4** | Medium | Medium |
| **Composition 5** | Slow | High |
| **Composition 6** | Fast | Medium |
| **Composition 7** | Medium | High |
| **Composition 8** | Medium | High |
| **Composition 9** | Slow | High |
| **Composition 10** | Slow | High |

Composition 6 and Composition 9 comprise an identical amount of PEO, but Composition 9 comprises 5-times as much PAA. As **Table 2** indicates, composites made from Composition 9 decomposed slower when coming into contact with water, as compared to composites formed of Composition 6 which degradation was faster. The sealing temperature for a composite made from Composition 6 was low while the temperature for a composite of Composition 9 was high, as expected with an increase in the amount of PAA.

When Composition 6 was modified by increasing the amount of PAA, to produce a composite of a Composition such as Composition 7, water dissolution rate decreases and the sealing temperature increases. This is also consistent with a decrease in the dissolution rate due to the relative reduction in the amount of PEO.

**Table 3- further exemplary Compositions of the invention**

| **Component** | **PVOH** | **PAA** | **PEO** | **PCL** | **Salt, e.g., CaCl₂** | **Cellulose material, e.g., HEC** | **Water degradation** | **Sealing temperature** |
|---|---|---|---|---|---|---|---|---|
| Composition **11** | 91.5-99.3wt% | 0.1-0.5wt% | 0-1wt% | 0% | 0.1-5wt% | 0.1-2wt% | Fast | Medium |
| Composition **12** | 87.5-98.7wt% | 0.1-0.5wt% | 1-5wt% | 0% | 0.1-5wt% | 0.1-2wt% | Fast | Medium |
| Composition **13** | 94.6-82.5wt% | 0.1-0.5wt% | 5-10wt% | 0% | 0.1-5wt% | 0.1-2wt% | Very Fast | Medium |
| Composition **14** | 87-93.3wt% | 0.5-2wt% | 0-1wt% | 0% | 0.1-5wt% | 0.1-5wt% | Slow | High |
| Composition **15** | 83-98.7wt% | 0.5-2wt% | 1-5wt% | 0% | 0.1-5wt% | 0.1-5wt% | Medium | High |
| Composition **16** | 78.5-94.3wt% | 0.5-2wt% | 5-10wt% | 0% | 0.1-5wt% | 0.1-5wt% | Fast | High |
| Composition **17** | 79.5-93.8wt% | 0.1-0.5wt% | 5-10wt% | 1-5wt% | 0.1-5wt% | 0% | Fast | Medium |
| Composition **18** | 68-93.5wt% | 0.1-0.5wt% | 1-5wt% | 5-10wt% | 0.1-5wt% | 0% | Medium | Low |
| Composition **19** | 81.5-93.7wt% | 0.1-1.5wt% | 0-1wt% | 5-10wt% | 0.1-5wt% | 0.1-2wt% | Medium | Low |
| Composition **20** | 73.5-93.3wt% | 0.5-1.5wt% | 5-10wt% | 1-5wt% | 0.1-5wt% | 0.1-5wt% | Fast | Medium |
| Composition **21** | 82-98.6 wt% | 1-2wt% | 0.1-1wt% | 1-5wt% | 0.1-5wt% | 0.1-5wt% | Slow | Medium |
| Composition **22** | 77.5-98.2wt% | 0.5-1.5wt% | 0.1-1wt% | 5-10wt% | 0.1-5wt% | 0.1-5wt% | Medium | Low |

An exemplary composite comprising 1% PAA and 5% PCL demonstrated a sealing temperature that was lower as compared to a composite comprising 2% PAA and 1% PCL., a composite comprising 1% PAA and 5% PEO, demonstrated a faster water decomposition time (decomposition within 10-15 minutes, as measured under stirring at RT), as compared with a composite comprising 2% PAA and 1% of PEO which showed a slow range decomposition time (decomposition between 40-50 minutes, as measure under stirring at RT).

As **Table 3** demonstrates, with an increase in the relative amounts of PCL, the sealing temperature (namely the temperature necessary to adhere two polymeric materials) decreased. Compositions 17, 20 and 21 have a medium heat-sealing temperature and Compositions 18, 19 and 22 have a much lower heat-sealing temperature. With increasing amounts of PAA, water decomposition time was decreased (under stirring at RT). Thus, Compositions 14 and 21 have a much higher water decomposition time. The amount of PEO can tweak the decomposition time, when a larger amount of PAA is used- Composition 13 solubility is faster than Composition 11, and Composition 16 has a higher solubility rate as compared to that of Composition 15.

Compositions of the invention may thus comprise an amount of PVOH that is between 80 and 85 wt%; 80 and 90 wt%; 80 and 99 wt%; 85 and 99 wt%; 90 and 99 wt%; 78 and 85 wt%; or between 78 and 90 wt%.

In some embodiments, the amount of the at least one crosslinking component is between 0.1 and 1 wt%; 0.1 and 2 wt%; 0.1 and 4 wt%; 0.1 and 5 wt%; 0.1 and 7 wt%; 0.1 and 10 wt%; 0.1 and 12 wt%; 0.1 and 15 wt%; 0.1 and 17 wt%; 0.1 and 0.2 wt%; 0.1 and 0.3 wt%; 0.1 and 0.4 wt%; 0.1 and 0.5 wt%; 0.1 and 0.6 wt%; 0.1 and 0.7 wt%; 0.1 and 0.8 wt%; 0.1 and 0.9 wt%; 1 and 20 wt%; 3 and 20 wt%; 5 and 20 wt%; 7 and 20 wt%; 9 and 20 wt%; 10 and 20 wt%; 12 and 20 wt%; 15 and 20 wt%; or between 17 and 20 wt%.

In some embodiments, the amount of the at least one bioplastic is between 0.1 and 1 wt%; 0.1 and 2 wt%; 0.1 and 4 wt%; 0.1 and 5 wt%; 0.1 and 7 wt%; 0.1 and 10 wt%; 0.1 and 12 wt%; 0.1 and 15 wt%; 0.1 and 17 wt%; 0.1 and 19 wt%; 0.1 and 20 wt%; 0.1 and 22 wt%; 0.1 and 25 wt%; 0.1 and 27 wt%; 0.1 and 30 wt%; 0.1 and 32 wt%; 0.1 and 35 wt%; 0.1 and 37 wt%; 0.1 and 40 wt%; 0.1 and 43 wt%; 0.1 and 45 wt%; 0.1 and 47 wt%; 1 and 5 wt%; 1 and 7 wt%; 1 and 10 wt%; 1 and 12 wt%; 1 and 15 wt%; 1 and 17 wt%; 1 and 20 wt%; 1 and 22 wt%; 1 and 25 wt%; 1 and 27 wt%; 1 and 30 wt%; 1 and 32 wt%; 1 and 35 wt%; 1 and 37 wt%; 1 and 40 wt%; 1 and 42 wt%; 1 and 45 wt%; 1 and 47 wt%; 3 and 20 wt%; 5 and 20 wt%; 7 and 20 wt%; 9 and 20 wt%; 10 and 20 wt%; 12 and 20 wt%; 15 and 20 wt%; or between 17 and 20 wt%; 5 and 20 wt%; 5 and 25 wt%; 5 and 30 wt%; 5 and 35 wt%; 5 and 40 wt%; 5 and 45 wt%; or between 5 and 50 wt%.

In some embodiments, the amount of the at least one additive is between 0.1 and 1 wt%; 0.1 and 2 wt%; 0.1 and 4 wt%; 0.1 and 5 wt%; 0.1 and 7 wt%; 0.1 and 10 wt%; 0.1 and 12 wt%; 0.1 and 15 wt%; 0.1 and 17 wt%; 0.1 and 0.2 wt%; 0.1 and 0.3 wt%; 0.1 and 0.4 wt%; 0.1 and 0.5 wt%; 0.1 and 0.6 wt%; 0.1 and 0.7 wt%; 0.1 and 0.8 wt%; 0.1 and 0.9 wt%; 1 and 20 wt%; 3 and 20 wt%; 5 and 20 wt%; 7 and 20 wt%; 9 and 20 wt%; 10 and 20 wt%; 12 and 20 wt%; 15 and 20 wt%; or between 17 and 20 wt%.

In some embodiments, the PVOH is present in an amount between 73-96.5, 68.5-89.8, 77.5-96.3, 67.5-91.5, 72-95, 71-85, 81-90, 68-81, 75-84, 60-78, 91.5-99.3, 87.5-98.7, 94.6-82.5, 87-93.3, 83-98.7, 78.5-94.3, 79.5-93.8, 68-93.5, 81.5-93.7, 73.5-93.3, 82-98.6 or between 77.5-98.2 wt%; and the at least one crosslinking compound is present in an amount of 0.1-1.5, 1.5-2.5, 1-2.5, 1.5-4, 1, 1.5-2, 1.5-2, 5, 0.1-0.5, 0.5-2, 0.1-0.5 or between 1-2 wt%; and/or the at least one bioplastic in an amount between 1.5-10, 5-10, 1.5-5, 1.5-4, 5, 2, 10, 0-1, 1-5, 5-10, 0.1-1 or between 0.1-1 wt%, and wherein the composition optionally comprises at least one additive.

In some embodiments, a composition of the invention comprises PVOH, PAA and PEO, respectively, in an amount selected from:
- 73-96.5 wt%, 0.1-1.5 wt% and 1.5-10 wt%;
- 68.5-89.8 wt%, 0.1-1.5 wt% and 5-10 wt%;
- 77.5-96.3 wt%, 1.5-2.5 wt% and 1.5-5 wt%;
- 67.5-91.5 wt%, 1-2.5 wt% and 1.5-5 wt%;
- 72-95 wt%, 1.5-4 wt% and 1.5-4 wt%;
- 71-85 wt%, 1 wt% and 5 wt%;
- 81-90 wt%, 1.5-2 wt% and 2wt%;
- 68-81 wt%, 1.5-2 wt% and 5 wt%;
- 75-84 wt%, 5 wt% and 5 wt%;
- 60-78 wt%, 5 wt% and 10 wt%;
- 91.5-99.3 wt%, 0.1-0.5 wt% and 0-1wt%;
- 87.5-98.7 wt%, 0.1-0.5 wt% and 1-5 wt%;
- 94.6-82.5 wt%, 0.1-0.5 wt% and 5-10 wt%;
- 87-93.3 wt%, 0.5-2 wt% and 0-1 wt%;
- 83-98.7 wt%, 0.5-2 wt% and 1-5 wt%;
- 78.5-94.3 wt%, 0.5-2 wt% and 5-10 wt%;
- 79.5-93.8 wt%, 0.1-0.5 wt% and 5-10 wt%; and further optionally comprises PCL in an amount ranging between 1-5 wt%;
- 68-93.5 wt%, 0.1-0.5 wt% and 1-5 wt%; and further optionally comprises PCL in an amount ranging between 5-10wt%
- 81.5-93.7 wt%, 0.1-1.5 wt% and 0-1 wt%; and further optionally comprises PCL in an amount ranging between 5-10 wt%;
- 73.5-93.3 wt%, 0.5-1.5 wt% and 5-10wt%; and further optionally comprises PCL in an amount ranging between 1-5 wt%;
- 82-98.6 wt%, 1-2 wt% and 0.1-1 wt%; and further optionally comprises PCL in an amount ranging between 1-5 wt%; or
- 77.5-98.2 wt%, 0.5-1.5 wt% and 0.1-1 wt%; and further optionally comprises PCL in an amount ranging between 5-10 wt%.

Compositions exemplified herein demonstrate and substantiate a novel process for modifying at least one property of a solid composite material derived from a material combination, as disclosed herein, for example a combination comprising a poly(vinyl alcohol) (PVOH), poly(ethylene oxide) (PEO) and poly(acrylic acid) (PAA).

Composites of the invention are said to be solid and may be manufactured, as disclosed herein, with one or more improved property. The properties may be endowed based on the intended use of the composites. Composites of the invention may be manufactured into a variety of shapes and sizes and forms and may be manufactured by a variety of processed techniques as known in the field of polymeric materials.

Thus, it is further described a composite material, in an unspecified form, comprising:
- at least one material selected amongst polymeric materials that in combination are susceptible to crosslinking. These polymers may be selected from poly(vinyl alcohol), poly(acrylic acid) and glutaraldehyde;
- at least one additional bioplastic material and selected to be water insoluble. The material is also selected to be biodegradable. By including such a material, the amount of a material such as poly(vinyl alcohol), poly(acrylic acid) and glutaraldehyde may be reduced. A combination of materials poly(vinyl alcohol), poly(acrylic acid) or glutaraldehyde with a biodegradable material selected from water insoluble materials is designed to tweak sensitivity to water. In some embodiments, water insoluble material is selected amongst cellulose-derived materials, such as hydroxypropylmethyl cellulose (HPMC), hydroxypropyl cellulose (HPC), hydroxyethyl cellulose (HEC), carboxymethyl cellulose (CMC) and/or chitosan;
- at least one material selected amongst hygroscopic materials. Such materials may be ionic materials such as calcium salts, e.g., CaCl₂; and
- at least one material is selected amongst bioplastics. Non-limiting examples include PEO.

Also provided is a polymeric composition, being in some embodiments in the form of a solid composite, comprising a combination of poly(vinyl alcohol) (PVOH), poly(ethylene oxide) (PEO) and poly(acrylic acid) (PAA) (herein the ***core combination),*** optionally with at least one material selected from an inorganic salt, a cellulose-derived substance, and chitosan.

The invention further provides a raw material composed of poly(vinyl alcohol) (PVOH), poly(ethylene oxide) (PEO) and poly(acrylic acid) (PAA) and at least one material selected from an inorganic salt, a cellulose-derived substance, chitosan and formaldehyde.

In some embodiments, composites of the invention comprise poly(vinyl alcohol) (PVOH), poly(ethylene oxide) (PEO), poly(acrylic acid) (PAA) and at least one material selected from an inorganic salt, a cellulose-derived substance, chitosan and formaldehyde.

Composites of the invention may be made into any shape and form, as substantially 1-dimensional objects, e.g., fibers; 2-dimensional objects, e.g., sheets or films; or 3-dimensional objects. In some embodiments, the composite is in the form of a material sheet or film. In other embodiments, the composite is a 3-dimensional product which can be made by manipulating the composite sheet or film, or by any one method selected from casting, blowing, injection and injection molding, extrusion, and others. Non-limiting examples of 3-dimensional products that can be manufactured include storage chambers and containers, boxes, tubing, liners, advertising stands and billboards, exhibition equipment and panels, automotive components, bags, accessories, clothing segments, pipes, rods.

In some embodiments, the composition comprising
**A-** poly(vinyl alcohol) (PVOH) in an amount ranging between 30 and 99 wt%.
   In some embodiments, the amount of PVOH in a composition is between 30 and 40 wt%; 30 and 45 wt%; 30 and 50 wt%; 30 and 55 wt%; 30 and 60 wt%; 30 and 65 wt%; 30 and 70 wt%; 30 and 75 wt%; 30 and 80 wt%; 30 and 85 wt%; 30 and 90 wt%; 40 and 45 wt%; 40 and 50 wt%; 40 and 60 wt%; 40 and 70 wt%; 40 and 80 wt%; 40 and 90 wt%; 50 and 60 wt%; 50 and 70 wt%; 50 and 80 wt%; 50 and 90 wt%; 60 and 70 wt%; 60 and 80 wt%; 60 and 90 wt%; 70 and 80 wt%; 70 and 90 wt%; 80 and 85 wt%; 80 and 90 wt%; 80 and 99 wt%; 85 and 99 wt%; 90 and 99 wt%; 78 and 85 wt%; or between 78 and 90 wt%.
**B-** at least one crosslinking compound selected from polymers, copolymers and nonpolymeric materials in an amount ranging between 0.1 and 20 wt%.
   In some embodiments, the amount of this component in a composition of the invention is between 0.1 and 1 wt%; 0.1 and 2 wt%; 0.1 and 4 wt%; 0.1 and 5 wt%; 0.1 and 7 wt%; 0.1 and 10 wt%; 0.1 and 12 wt%; 0.1 and 15 wt%; 0.1 and 17 wt%; 0.1 and 0.2 wt%; 0.1 and 0.3 wt%; 0.1 and 0.4 wt%; 0.1 and 0.5 wt%; 0.1 and 0.6 wt%; 0.1 and 0.7 wt%; 0.1 and 0.8 wt%; 0.1 and 0.9 wt%; 1 and 20 wt%; 3 and 20 wt%; 5 and 20 wt%; 7 and 20 wt%; 9 and 20 wt%; 10 and 20 wt%; 12 and 20 wt%; 15 and 20 wt%; or between 17 and 20 wt%.
**C-** at least one bioplastic in an amount ranging between 0.1 and 50 wt%.
   In some embodiments, the amount of the bioplastic is between 0.1 and 1 wt%; 0.1 and 2 wt%; 0.1 and 4 wt%; 0.1 and 5 wt%; 0.1 and 7 wt%; 0.1 and 10 wt%; 0.1 and 12 wt%; 0.1 and 15 wt%; 0.1 and 17 wt%; 0.1 and 19 wt%; 0.1 and 20 wt%; 0.1 and 22 wt%; 0.1 and 25 wt%; 0.1 and 27 wt%; 0.1 and 30 wt%; 0.1 and 32 wt%; 0.1 and 35 wt%; 0.1 and 37 wt%; 0.1 and 40 wt%; 0.1 and 43 wt%; 0.1 and 45 wt%; 0.1 and 47 wt%; 1 and 5 wt%; 1 and 7 wt%; 1 and 10 wt%; 1 and 12 wt%; 1 and 15 wt%; 1 and 17 wt%; 1 and 20 wt%; 1 and 22 wt%; 1 and 25 wt%; 1 and 27 wt%; 1 and 30 wt%; 1 and 32 wt%; 1 and 35 wt%; 1 and 37 wt%; 1 and 40 wt%; 1 and 42 wt%; 1 and 45 wt%; 1 and 47 wt%; 3 and 20 wt%; 5 and 20 wt%; 7 and 20 wt%; 9 and 20 wt%; 10 and 20 wt%; 12 and 20 wt%; 15 and 20 wt%; or between 17 and 20 wt%; 5 and 20 wt%; 5 and 25 wt%; 5 and 30 wt%; 5 and 35 wt%; 5 and 40 wt%; 5 and 45 wt%; or between 5 and 50 wt%.
**D-** at least one additive in an amount ranging between 0.1 and 20 wt%.
   In some embodiments, the amount of the additive in a composition of the invention is between 0.1 and 1 wt%; 0.1 and 2 wt%; 0.1 and 4 wt%; 0.1 and 5 wt%; 0.1 and 7 wt%; 0.1 and 10 wt%; 0.1 and 12 wt%; 0.1 and 15 wt%; 0.1 and 17 wt%; 0.1 and 0.2 wt%; 0.1 and 0.3 wt%; 0.1 and 0.4 wt%; 0.1 and 0.5 wt%; 0.1 and 0.6 wt%; 0.1 and 0.7 wt%; 0.1 and 0.8 wt%; 0.1 and 0.9 wt%; 1 and 20 wt%; 3 and 20 wt%; 5 and 20 wt%; 7 and 20 wt%; 9 and 20 wt%; 10 and 20 wt%; 12 and 20 wt%; 15 and 20 wt%; or between 17 and 20 wt%.

In some embodiments, a composition of the invention comprises an amount of PVOH between 73-96.5, 68.5-89.8, 77.5-96.3, 67.5-91.5, 72-95, 71-85, 81-90, 68-81, 75-84, 60-78, 91.5-99.3, 87.5-98.7, 94.6-82.5, 87-93.3, 83-98.7, 78.5-94.3, 79.5-93.8, 68-93.5, 81.5-93.7, 73.5-93.3, 82-98.6 or between 77.5-98.2 wt%; and an amount of at least one crosslinking compound, as disclosed herein, in an amount of 0.1-1.5, 1.5-2.5, 1-2.5, 1.5-4, 1, 1.5-2, 1.5-2, 5, 0.1-0.5, 0.5-2, 0.1-0.5 or between 1-2 wt%; and/or at least one bioplastic in an amount between 1.5-10, 5-10, 1.5-5, 1.5-4, 5, 2, 10, 0-1, 1-5, 5-10, 0.1-1 or between 0.1-1 wt%, wherein the total amount of the components (including additives, if present) is scaled (or adds up) to 100%.

In some embodiments, a composition of the invention may further comprise at least one additive.

In some embodiments, a composition of the invention comprises a material from group (A), (B) and (C) above, e.g., PVOH, PAA and PEO, respectively:
- 73-96.5 wt%, 0.1-1.5 wt% and 1.5-10 wt%;
- 68.5-89.8 wt%, 0.1-1.5 wt% and 5-10 wt%;
- 77.5-96.3 wt%, 1.5-2.5 wt% and 1.5-5 wt%;
- 67.5-91.5 wt%, 1-2.5 wt% and 1.5-5 wt%;
- 72-95 wt%, 1.5-4 wt% and 1.5-4 wt%;
- 71-85 wt%, 1 wt% and 5 wt%;
- 81-90 wt%, 1.5-2 wt% and 2wt%;
- 68-81 wt%, 1.5-2 wt% and 5 wt%;
- 75-84 wt%, 5 wt% and 5 wt%;
- 60-78 wt%, 5 wt% and 10 wt%;
- 91.5-99.3 wt%, 0.1-0.5 wt% and 0-1wt%;
- 87.5-98.7 wt%, 0.1-0.5 wt% and 1-5 wt%;
- 94.6-82.5 wt%, 0.1-0.5 wt% and 5-10 wt%;
- 87-93.3 wt%, 0.5-2 wt% and 0-1 wt%;
- 83-98.7 wt%, 0.5-2 wt% and 1-5 wt%;
- 78.5-94.3 wt%, 0.5-2 wt% and 5-10 wt%;
- 79.5-93.8 wt%, 0.1-0.5 wt% and 5-10 wt%; and further optionally comprises PCL in an amount ranging between 1-5 wt%;
- 68-93.5 wt%, 0.1-0.5 wt% and 1-5 wt%; and further optionally comprises PCL in an amount ranging between 5-10wt%
- 81.5-93.7 wt%, 0.1-1.5 wt% and 0-1 wt%; and further optionally comprises PCL in an amount ranging between 5-10 wt%;
- 73.5-93.3 wt%, 0.5-1.5 wt% and 5-10wt%; and further optionally comprises PCL in an amount ranging between 1-5 wt%;
- 82-98.6 wt%, 1-2 wt% and 0.1-1 wt%; and further optionally comprises PCL in an amount ranging between 1-5 wt%;
- 77.5-98.2 wt%, 0.5-1.5 wt% and 0.1-1 wt%; and further optionally comprises PCL in an amount ranging between 5-10 wt%.

The invention further provides a process for manufacturing an object or a composite according to the invention. The process, modified in accordance with the production rules provided herein, the process comprising:
- forming a core composition comprising PAA and PEO; and
- treating said core composition with a composition comprising PVOH and any of the additional materials discussed herein
under conditions permitting compounding of all components into a single homogenous composition and processing said composition to yield a 1D, 2D or 3D object.

The invention further provides a process comprising:
- forming a core composition, e.g., comprising PVOH, PEO and PAA;
- treating said core composition with at least one additional material selected as above, e.g., from an inorganic salt, a cellulose-derived substance, chitosan and formaldehyde;
under conditions permitting compounding of all components into a single homogenous composition and processing said composition to yield a 1D, 2D or 3D object.

As stated herein, for example- to modulate water decomposition rates, composites comprising an amount of PAA ranging from 0.1 and 2wt%, can be tailored to be more or less susceptible for water decomposition. The more PAA is present (namely an amount that is closer to the 2wt% limit), the slower is the observed water decomposition. Smaller amounts of PAA (namely an amount that is close to the 0.1wt% limit) enable a faster water decomposition. In a similar fashion, composites comprising an amount of PEO ranging from 1 and 10wt%, can be tailored to be more or less susceptible for water decomposition. The more PEO is present (namely an amount that is closer to the 10wt% limit), the faster is the observed water decomposition. Smaller amounts of PEO (namely an amount that is close to the 1.5wt% limit) enable a slower water decomposition, at a fixed PAA concentration.

In some embodiments, the process comprises a step of providing a formulation comprising PVOH.

In some embodiments, the formulation comprising PVOH is added into or combined with a premade formulation comprising PEO, and, in some embodiments, the combined formulation is allowed to mix to afford a homogenous formulation.

In some embodiments, the PVOH-PEO formulation is added to or combined with a premade formulation of PAA under conditions permitting crosslinking of PAA and PVOH. In some embodiments, crosslinking is enabled by the addition of at least one acid at a temperature between room temperature (RT, 23 to 30°C) and 230°C (or a temperature between 120 and 150°C, or between 150 and 230°C). In some embodiments, the temperature is between 50 and 150°C or between 150 and 230°C. In some embodiments, the acid may be selected from mineral acids and organic acids. In some embodiments, the acid is selected from sulfuric acid, HCl, nitric acid. In some embodiments, the combination of PVOH, PEO and PAA is further treated with or combined with at least one inorganic salt. In some embodiments, the inorganic salts are as defined hereinabove.

In some embodiments, the combination of PVOH, PEO and PAA is further treated with or combined with PVOH and at least one cellulose-based material, selected as recited hereinabove.

The compounding of the components together into a single homogenous composition may be performed under mixing at a temperature between room temperature (23° to 30°C) and 120-230°C, or 150 and 230°C. When a homogenous composition is formed, it may thereafter be manipulated or processed under industrial acceptable conditions to afford the final composite product. Such processes may involve one or more of casting, blowing, injection and extrusion.

The invention further provides exemplary composites as prepared and characterized herein, the composites being formed of compositions listed in **Tables 1** and **3.** Thus, the invention further contemplates compositions listed in **Tables 1** and **3** designated herein as Compositions 1 through 22.

Also provided are composites, as defined, formulated of the aforementioned compositions designated Compositions 1 through 22.

In accordance with a process of the invention, a final product produced from a raw material comprising PVOH, PEO, and PAA and optionally one or more additional materials, e.g., selected from an inorganic salt, a cellulose-derived substance, chitosan and glycerol, may be endowed with a desired property or set of properties by modifying, fine tuning or tweaking the process for its production. The process may be modified by varying the material ratio amounts between two or more components contained in a core combination (namely PVOH, PEO and PAA) or between any component of the core combination and any other component of the material combination (e.g., an inorganic salt, a cellulose-derived substance, chitosan and glycerol), by varying the additional components that are added to the core combination, by changing or modifying the processing conditions of the process for making the solid product, or by selecting a particular process sequence. Examples of the effect of these modifications on the properties of the final solid product are provided hereinbelow.

The process comprises a step of controlling a weight per weight ratio (w/w) between (a) two or more materials selected from PVOH, PEO and PAA, or (b) between at least one material selected from PVOH, PEO and PAA and at least one other material selected from an inorganic salt, a cellulose-derived substance, chitosan and formaldehyde, provides the option of modifying a property of the solid composite by selecting a material ratio between any two materials from the core combination comprising PVOH, PEO and PAA, e.g., a ratio between PVOH and PEO, or PVOH and PAA, or PEO and PAA, or between any one of PVOH, PEO and PAA and any of inorganic salt, a cellulose-derived substance, chitosan and formaldehyde. Non-limiting pairs of materials which relative weight amounts (in grams or wt%) have an effect on at least one property of the solid final product, include PVOH and PEO, PVOH and PAA, PEO and PAA, PVOH and an inorganic salt, PVOH and a cellulose-containing substance, PVOH and chitosan, PVOH and formaldehyde, PEO and an inorganic salt, PEO and a cellulose-derived substance, PEO and chitosan, PEO and formaldehyde, PAA and an inorganic salt, PAA and a cellulose-derived substance, PAA and chitosan and PAA and formaldehyde.

As demonstrated in examples provided herein, increasing the amount of the inorganic salt (such as a calcium salt, e.g., calcium chloride) relative to at least one component of the core combination results in an increase in the elongation ability of the solid product obtained from a composition comprising the core combination and at least one inorganic salt.

In a similar fashion, increasing the amount of PVOH relative to PAA increases the OTR. Increasing the amount of PAA relative to PVOH, increases rigidity.

Also, modifying the relative amounts of PEO, imposes an effect on the product stability towards water. Increasing the amount of PEO relative to either PAA or PVOH, increase water solubility (or decreases water resistance and increases water degradability) and increases material flexibility. Similarly, increasing the amount of a cellulose-derived substance (such as HPMC) relative to any of the core components, decreases water solubility of the solid final product.

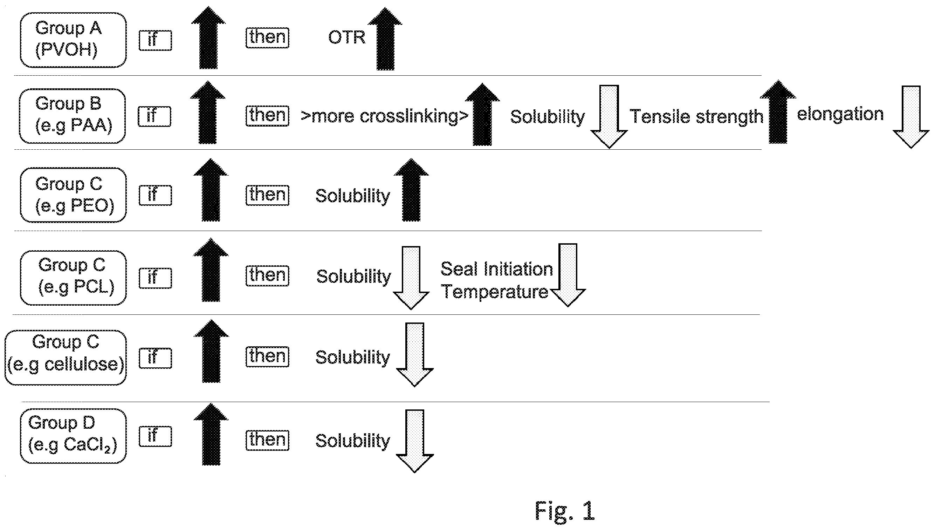

Embodiments of the invention demonstrating the ability to modulate some of the properties recited herein is depicted in **Fig. 1****.**

As used herein, the term ***"ratio",*** material ratio" or "w/w ratio" suggest a material amount of one component of the combination (out of the total weight of the combination), relative to a material amount of another component of the combination (out of the total weight of the combination). For example, a ratio between PVOH and PEO relates to the relative amount of PVOH as compared to the amount of PEO in the combination. The ratio is provided in absolute weight values. For example, a ratio of 1:1 PVOH:PEO indicates an identical amount for each of the components in the combination. An increased ratio stated with respect of one of the components means an increase in the amount of that specific component relative to the other. When the amount of, e.g., PVOH is increased relative to PEO, the stated ratio may be greater than 1:1, for example 2:1 or higher.

Thus, there is provided a process for manufacturing a solid composite material having a predefined water decomposition rate, the process comprising
- in a process for manufacturing the solid composite material controlling a weight per weight ratio (w/w) between:
   - (a) two or more materials selected from poly(vinyl alcohol) (PVOH), poly(ethylene oxide) (PEO) and poly(acrylic acid) (PAA), or
   - (b) between at least one material selected from PVOH, PEO and PAA and at least one other material selected from an inorganic salt, a cellulose-derived substance, chitosan and formaldehyde.

It is further described, a "predefined water decomposition rate" is a rate at which a composite of the invention decomposes upon contact with water. The rate may be measured in units of gram per minute or simply by the number of minutes it takes an article to begin decomposition. As stated herein, composites comprising an amount of PAA ranging from 0.1 and 2wt%, can be tailored to be more or less susceptible for water decomposition. The more PAA is present (namely an amount that is closer to the 2wt% limit), the slower is the observed water decomposition. Smaller amounts of PAA (namely an amount that is close to the 0.1wt% limit) enable a faster water decomposition. In a similar fashion, composites comprising an amount of PEO ranging from 1.5 and 10wt%, can be tailored to be more or less susceptible for water decomposition. The more PEO is present (namely an amount that is closer to the 10wt% limit), the faster is the observed water decomposition. Smaller amounts of PEO (namely an amount that is close to the 1.5wt% limit) enable a slower water decomposition.

Thus, the process for manufacturing a solid composite material having a predefined water decomposition rate comprises modifying:
(a) an amount of PAA to be between 0.1 and 2wt%, wherein the amount of PAA in the composite is high (between 1 and 2wt%), the slower is the water decomposition, and wherein the amount of PAA is low (between 0.1 and 1wt%), the water decomposition is fast; or
(b) an amount of PEO to be between 1.5 and 10wt%, wherein the amount of PEO in the composite is high (between 3 and 10wt%), the faster is the water decomposition, and wherein the amount of PEO is low (between 1.5 and 3wt%), the water decomposition is slow.

It is further described, composites containing between 0.4 and 0.55 wt% PAA in PVOH showed a rate of degradation of ~1 mg/(min x cm²). Composites containing between 0.6 and 1.4 wt% PAA in PVOH showed a rate of water degeneration of ~0.2 mg/(min x cm²).

Also provided is a process for modifying at least one property of a solid composite material formed of a composition according to the invention, the process comprising treating a composition comprising an amount of PAA and an amount of PEO with a composition comprising an amount of PVOH and optionally at least one additive, wherein the amount of PAA, the amount of PEO and optionally the amount of PVOH is selected to modify the at least one property, under conditions permitting compounding of the PAA, PEO and PVOH, and optionally at least one additive, into the solid composite having the at least one property.

It is further described, the at least one property is water degradation.

It is further described, the amount of the PAA and the amount of the PEO are at a ratio of 1:5, respectively.

It is further described, the amount of the PAA and the amount of the PEO are at a ratio of 2:8. In some embodiments, the ratio is 2:8 PAA:PEO.

It is further described, the ratio between the amount of PEO and the amount of PAA combined to the amount of PVOH is 2:98, respectively.

It is further described, the ratio between the amount of PEO and the amount of PAA combined to an amount of PCL and the amount of PVOH is 2:5:93, PEO/PAA:PCL:PVOH.

In some embodiments, the amount of the PAA is between 0.4 and 0.5 wt%.

In some embodiments, the amount of the PAA is between 0.9 and 1.1 wt%.

In some embodiments, the amount of the PVOH is between 80 and 85 wt%; 80 and 90 wt%; 80 and 99 wt%; 85 and 99 wt%; 90 and 99 wt%; 78 and 85 wt%; or between 78 and 90 wt%.

In some embodiments, the amount of the PAA is between 0.1 and 1 wt%; 0.1 and 2 wt%; 0.1 and 4 wt%; 0.1 and 5 wt%; 0.1 and 7 wt%; 0.1 and 10 wt%; 0.1 and 12 wt%; 0.1 and 15 wt%; 0.1 and 17 wt%; 0.1 and 0.2 wt%; 0.1 and 0.3 wt%; 0.1 and 0.4 wt%; 0.1 and 0.5 wt%; 0.1 and 0.6 wt%; 0.1 and 0.7 wt%; 0.1 and 0.8 wt%; 0.1 and 0.9 wt%; 1 and 20 wt%; 3 and 20 wt%; 5 and 20 wt%; 7 and 20 wt%; 9 and 20 wt%; 10 and 20 wt%; 12 and 20 wt%; 15 and 20 wt%; or between 17 and 20 wt%.

In some embodiments, the amount of the PEO is between 0.1 and 1 wt%; 0.1 and 2 wt%; 0.1 and 4 wt%; 0.1 and 5 wt%; 0.1 and 7 wt%; 0.1 and 10 wt%; 0.1 and 12 wt%; 0.1 and 15 wt%; 0.1 and 17 wt%; 0.1 and 19 wt%; 0.1 and 20 wt%; 0.1 and 22 wt%; 0.1 and 25 wt%; 0.1 and 27 wt%; 0.1 and 30 wt%; 0.1 and 32 wt%; 0.1 and 35 wt%; 0.1 and 37 wt%; 0.1 and 40 wt%; 0.1 and 43 wt%; 0.1 and 45 wt%; 0.1 and 47 wt%; 1 and 5 wt%; 1 and 7 wt%; 1 and 10 wt%; 1 and 12 wt%; 1 and 15 wt%; 1 and 17 wt%; 1 and 20 wt%; 1 and 22 wt%; 1 and 25 wt%; 1 and 27 wt%; 1 and 30 wt%; 1 and 32 wt%; 1 and 35 wt%; 1 and 37 wt%; 1 and 40 wt%; 1 and 42 wt%; 1 and 45 wt%; 1 and 47 wt%; 3 and 20 wt%; 5 and 20 wt%; 7 and 20 wt%; 9 and 20 wt%; 10 and 20 wt%; 12 and 20 wt%; 15 and 20 wt%; or between 17 and 20 wt%; 5 and 20 wt%; 5 and 25 wt%; 5 and 30 wt%; 5 and 35 wt%; 5 and 40 wt%; 5 and 45 wt%; or between 5 and 50 wt%.

In some embodiments, the PVOH is present in an amount between 73-96.5, 68.5-89.8, 77.5-96.3, 67.5-91.5, 72-95, 71-85, 81-90, 68-81, 75-84, 60-78, 91.5-99.3, 87.5-98.7, 94.6-82.5, 87-93.3, 83-98.7, 78.5-94.3, 79.5-93.8, 68-93.5, 81.5-93.7, 73.5-93.3, 82-98.6 or between 77.5-98.2 wt%; and the PAA is present in an amount of 0.1-1.5, 1.5-2.5, 1-2.5, 1.5-4, 1, 1.5-2, 1.5-2, 5, 0.1-0.5, 0.5-2, 0.1-0.5 or between 1-2 wt%; and/or the PEO in an amount between 1.5-10, 5-10, 1.5-5, 1.5-4, 5, 2, 10, 0-1, 1-5, 5-10, 0.1-1 or between 0.1-1 wt%, and wherein the composition optionally comprises at least one additive.

In some embodiments, a composition comprises PVOH, PAA and PEO, respectively, in an amount selected from:
- 73-96.5 wt%, 0.1-1.5 wt% and 1.5-10 wt%;
- 68.5-89.8 wt%, 0.1-1.5 wt% and 5-10 wt%;
- 77.5-96.3 wt%, 1.5-2.5 wt% and 1.5-5 wt%;
- 67.5-91.5 wt%, 1-2.5 wt% and 1.5-5 wt%;
- 72-95 wt%, 1.5-4 wt% and 1.5-4 wt%;
- 71-85 wt%, 1 wt% and 5 wt%;
- 81-90 wt%, 1.5-2 wt% and 2wt%;
- 68-81 wt%, 1.5-2 wt% and 5 wt%;
- 75-84 wt%, 5 wt% and 5 wt%;
- 60-78 wt%, 5 wt% and 10 wt%;
- 91.5-99.3 wt%, 0.1-0.5 wt% and 0-1wt%;
- 87.5-98.7 wt%, 0.1-0.5 wt% and 1-5 wt%;
- 94.6-82.5 wt%, 0.1-0.5 wt% and 5-10 wt%;
- 87-93.3 wt%, 0.5-2 wt% and 0-1 wt%;
- 83-98.7 wt%, 0.5-2 wt% and 1-5 wt%;
- 78.5-94.3 wt%, 0.5-2 wt% and 5-10 wt%;
- 79.5-93.8 wt%, 0.1-0.5 wt% and 5-10 wt%; and further optionally comprises PCL in an amount ranging between 1-5 wt%;
- 68-93.5 wt%, 0.1-0.5 wt% and 1-5 wt%; and further optionally comprises PCL in an amount ranging between 5-10wt%
- 81.5-93.7 wt%, 0.1-1.5 wt% and 0-1 wt%; and further optionally comprises PCL in an amount ranging between 5-10 wt%;
- 73.5-93.3 wt%, 0.5-1.5 wt% and 5-10wt%; and further optionally comprises PCL in an amount ranging between 1-5 wt%;
- 82-98.6 wt%, 1-2 wt% and 0.1-1 wt%; and further optionally comprises PCL in an amount ranging between 1-5 wt%; or
- 77.5-98.2 wt%, 0.5-1.5 wt% and 0.1-1 wt%; and further optionally comprises PCL in an amount ranging between 5-10 wt%.

The degradation profile, namely the pace or rate at which the composite decomposes upon contact with water, and potentially also how degradation ensues, will thus depend on any of the factors disclosed herein. It is further described, water degradation is modulated by increasing an amount of the PEO relative to PAA, to thereby increase water degradation. Further, water degradation is modulated by increasing an amount of the PAA relative to PEO, to thereby decrease water degradation. Further, water degradation is modulated by decreasing an amount of the PEO relative to PAA, to thereby decrease water degradation. Further, water degradation is modulated by decreasing an amount of the PAA relative to PEO, to thereby increase water degradation.

The increase in an amount of the PEO or PAA, relative to that of PAA or PEO does not necessarily mean increasing the amount of PEO/PAA to be higher than the amount of the PAA/PEO, the increase in the amount should be sufficient to increase/decrease water degradation. The extent of increase/decrease in the amount(s) depends, inter alia, on the initial amount of PEO/PAA in the composition, the additional effects associated with an increase/decrease in the amount of PEO/PAA, the degradation profile that is desired and on other factors.

The invention also provides a process for modulating water degradation profile of a solid composite material formed of a composition according to the invention, the process comprising treating a composition comprising an amount of PAA and an amount of PVOH and optionally at least one additive with an effective amount of PEO, the effective amount being selected to increase or decrease water degradation of said solid composite, wherein the process is carried out under conditions permitting compounding of the PAA, PEO and PVOH, and optionally at least one additive, into the solid composite having the water degradation profile.

Also provided is a process for setting a water-degradation onset of a solid composite comprising PVOH, the process comprising:
- in preparing a composition comprising PVOH, at least one crosslinking material and at least one additional bioplastic, selecting an amount of the at least one crosslinking material and an amount of the at least one additional bioplastic which, in combination, hastens or delays water-degradation of the solid composite, and
- thermally treating said composition to form into the solid composite.

As used herein, the expression ***"setting a water-degradation onset"*** means predetermining the rate at which a composite will decompose or in other words whether a composite will exhibit immediate degradation in water, delayed degradation or no water degradation. By selecting the components of a composition from which a composite is made, the onset of degradation may be predetermined by simple experimental protocols, as disclosed herein. Determining a rate of decomposition, as disclosed herein, may be used to determine the earliest point at which a composite will deteriorate and degrade. Without wishing to be bound by theory or decomposition mechanisms, and depending on the form of the composite, e.g., film or granules, a degradation cascade may be concluded, and an onset of decomposition determined. For example, in the deterioration of a composite in a form of a film, initial deformation may be followed by tearing of the film, breaking into particles and subsequent dissolution. Thus, onset of degradation may be regraded as the stage of initial deformation.

Processes of the invention are thus configured to produce polymeric composites according to the invention. The composite may be characterized by a rate of water degradation that is 1 mg/(min x cm²), or 0.2 mg/(min x cm²) or between 0.001 mg/(min x cm²) to 5 mg/(min x cm²) or more. Some of the composites may be configured for immediate degradation and others may be configured to degrade after days or weeks or months from manufacture; and still others may be made not to degrade.

As stated, processes of the invention may comprise a step(s) of forming the composite into a desired form, e.g., a form of granules, a form of a master batch, a form of 1D, 2D or 3D object.

Also provided are objects comprising or consisting a composite of the invention, as disclosed herein and uses thereof.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
**Fig. 1** is a schematic representation of embodiments of the invention demonstrating the ability to modulate properties of a composite material.
**Fig. 2** demonstrates effect of PAA on PVOH dissolution.
**Fig. 3** demonstrates effect of PEO on PVOH dissolution.

### DETAILED DESCRIPTION OF THE INVENTION

### Example 1:

PAA and ground thermoplastic PVOH were mixed at a 1:99 ratio and extruded using an L/D 40 twin-screw co-rotating extruder at 50 rpm and 190-210 °C through a round die 3 mm in diameter, and the emerging polymer strand was passed through an air cooling system and a pelletizer.

### Example 2:

PAA, HPMC and ground thermoplastic PVOH were mixed at a 1:10:89 ratio and extruded using an L/D 40 twin-screw co-rotating extruder at 50 rpm and 190-210 °C through a round die 3 mm in diameter, and the emerging polymer strand was passed through an air cooling system and a pelletizer.

### Example 3:

PEO and PAA were mixed together at a 8:2 ratio and extruded using an L/D 40 twin-screw co-rotating extruder at 150 rpm and 80 °C through a round die 3 mm in diameter, and the emerging polymer strand was passed through an air cooling system and a pelletizer. The resulting PEO/PAA pellets were further mixed with PVOH at a 2:98 ratio and extruded using an L/D 40 twin-screw co-rotating extruder equipped with a devolatizing system at 50 rpm and 190-210 °C through a round die 3 mm in diameter, and the emerging polymer strand was passed through an air cooling system and a pelletizer.

### Example 4:

PEO and PAA were mixed together at a 8:2 ratio and extruded using an L/D 40 twin-screw co-rotating extruder at 150 rpm and 80 °C through a round die 3 mm in diameter, and the emerging polymer strand was passed through an air cooling system and a pelletizer. The resulting PEO/PAA pellets were further mixed with PCL and PVOH at a 2:5:93 ratio and extruded using an L/D 40 twin-screw co-rotating extruder equipped with a devolatizing system at 50 rpm and 190-210 °C through a round die 3 mm in diameter, and the emerging polymer strand was passed through an air cooling system and a pelletizer.

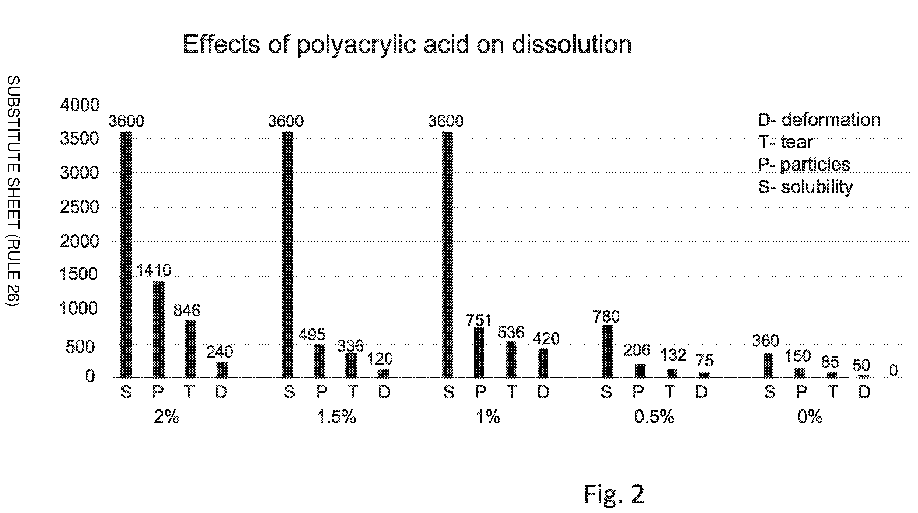

**Fig. 2** demonstrates the effect of PAA on PVOH dissolution: Compounds with 0%, 0.5% , 1% , 1.5% and 2% PAA in PVOH were produced by reactive extrusion. A sample was then pressed to 200 microns from each compound and dissolution was studied at room temperature under agitation. The time of initial deformation (D), tearing of the film (T), breaking into particles in water (P) and solubility (S) is recorded. In general, as PAA concentration increases in the compound, deformation, tearing, breaking into particles and solubility are delayed.

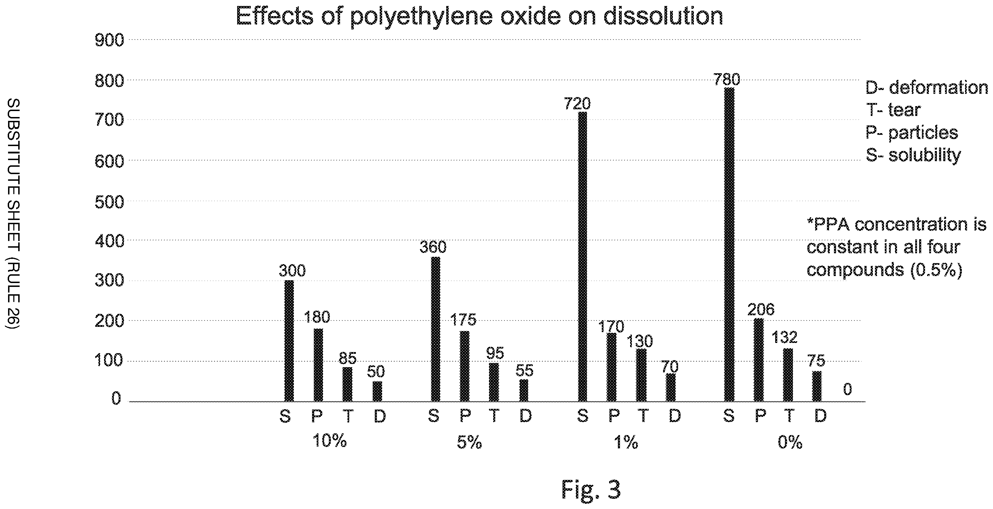

**Fig. 3** demonstrates the effect of PEO on PVOH dissolution: Compounds with 0%, 1%, 5% and 10% PEO in PVOH at a constant concentration of PAA (0.5%) were produced by reactive extrusion. A sample was then pressed to 200 microns from each compound and dissolution was studied at room temperature under agitation. The time of initial deformation (D), tearing of the film (T), breaking into particles in water (P) and solubility (S) is recorded. In general, as PEO concentration increases in the compound, deformation, tearing, breaking into particles and solubility are accelerated.

In addition to dissolution kinetics, some more physico-mechanical parameters for the compounds were characterized (data not shown). The polymer pellets were processed into 100 µm films at 200 °C films a cast extruder. The cast films were conditioned in accordance with ASTM E171/71M-11 (Reapproved in 2015). *Standard Practice for Conditioning and Testing Flexible Barrier Packaging* at 23±2 °C and 50±5 %RH for 48 hours. The tests were performed under the same temperature/humidity conditions as mentioned. Tensile properties of the films were determined according to ASTM D882-18 *Standard Test Method for Tensile Properties of Thin Plastic Sheeting.* For that purpose, 25.4 mm wide and 250 mm length strip specimens were cut out from the films using a Dual Blade Share Cutter in accordance with procedure B specified in ASTM D6287-17 *Standard Practice for Cutting Film and Sheeting Tests Specimens.* Five specimens for each film were tested. A Tensile Testing Machine LLOYD INSTRUMENTS (UK) LRX 5K with a 500 N load cell and line grips as per ASTM D882 was used in the tests. The initial distance between the grips was 100 mm. All specimens were tested along the films Machine Direction (MD) with a grips separation rate of 500 mm/min. According to these measurements, increasing PAA content in the compounds has increased the tensile strength, stress at break and Young's modulus, while the elongation at break was decreased.

The exemplary composite comprising 1% PAA have demonstrated higher tensile strength, stress at break and Young's modulus than the composite comprising 0.5% PAA, and the elongation at break of the composite comprising 1% PAA was lower than that of the composite comprising 0.5% PAA.

Another exemplary composite comprising 1% PAA have demonstrated lower tensile strength, stress at break and Young's modulus than the composite comprising 1.5% PAA, and the elongation at break of the composite comprising 1% PAA was higher than that of the composite comprising 1.5% PAA.

Another exemplary composite comprising 0.5% PAA have demonstrated higher tensile strength, stress at break and Young's modulus than the composite that did not contain PAA, and the elongation at break of the composite comprising 0.5% PAA was lower than that of the composite that did not contain PAA.

### ABSTRACT

The technology disclosed herein concerns a methodology for modifying properties of raw materials, offer final composites with preselected and unique mechanical properties.

## Claims

1. A composition comprising
**A-** poly(vinyl alcohol) (PVOH) in an amount ranging between 30 and 99 wt%;
**B-** at least one crosslinking compound being present in an amount ranging between 0.1 and 20 wt%, and selected from polymers, copolymers and nonpolymeric materials, each having a functionality capable of associating to the PVOH, wherein said functionality is a carboxylic acid selected from dicarboxylic acids, tricarboxylic acids and higher homologues;
**C-** at least one additional bioplastic that is a biodegradable polymer in an amount ranging between 0.1 and 50 wt%, wherein the at least one additional bioplastic is selected from poly(ethylene oxide) (PEO), poly(ethylene glycol) (PEG), polycaprolactone (PCL), poly(lactic acid) (PLA), cellulose and cellulose derivatives, starch, thermoplastic starch (TPS), chitosan and polyhydroxyalkanoates (PHAs); and
**D-** optionally at least one additive in an amount ranging between 0.1 and 20 wt%.

2. The composition according to claim 1, wherein the polymer is a polyacid optionally being poly(acrylic acid) (PAA) or poly(methacrylic acid) (PMAA).

3. The composition according to claim 1, wherein the at least one crosslinking compound is a polymer having carboxylic acid functionalities, the polymer being optionally selected from poly(ethylene-co-acrylic acid) (PE-co-AA), poly(ethylene-co-methacrylic acid) (PE-co-MAA), poly(lactide-block-acrylic acid) (PLA-block-AA), PVOH with carboxylic groups and carboxymethyl cellulose (CMC).

4. The composition according to claim 1, wherein the at least one additive is selected from inorganic additives, fillers, reinforcing agents, processing aids, slip agents, light stabilizers, UV absorbers, flame retardants, antimicrobial, antiviral agents, blowing agents, nucleating agents, antioxidants, antiblocking agents and antistatic agents.

5. The composition according to any one of claims 1 to 4, wherein the amount of the PVOH, at least one crosslinking compound and at least one additional bioplastic being selected to modulate water degradation of a composite formed of said composition, wherein water degradation is arrested or slowed down or delayed with a decrease in the amount of said at least one additional bioplastic relative to the amount of said at least one crosslinking material, and wherein the at least one additional bioplastic is optionally PEO.

6. The composition according to claim 1, wherein the PVOH is present in an amount between 73-96.5, 68.5-89.8, 77.5-96.3, 67.5-91.5, 72-95, 71-85, 81-90, 68-81, 75-84, 60-78, 91.5-99.3, 87.5-98.7, 94.6-82.5, 87-93.3, 83-98.7, 78.5-94.3, 79.5-93.8, 68-93.5, 81.5-93.7, 73.5-93.3, 82-98.6 or between 77.5-98.2 wt%; and the at least one crosslinking compound is present in an amount of 0.1-1.5, 1.5-2.5, 1-2.5, 1.5-4, 1, 1.5-2, 1.5-2, 5, 0.1-0.5, 0.5-2, 0.1-0.5 or between 1-2 wt%; and/or the at least one bioplastic in an amount between 1.5-10, 5-10, 1.5-5, 1.5-4, 5, 2, 10, 0-1, 1-5, 5-10, 0.1-1 or between 0.1-1 wt%, and wherein the composition optionally comprises at least one additive.

7. A process for modifying at least one property of a solid composite material formed of a composition according to any one of claims 1 to 6, the process comprising treating a composition comprising an amount of PAA and an amount of PEO with a composition comprising an amount of PVOH and optionally at least one additive, wherein the amount of PAA, the amount of PEO and optionally the amount of PVOH is selected to modify the at least one property, under conditions permitting compounding of the PAA, PEO and PVOH, and optionally at least one additive, into the solid composite having the at least one property.

8. The process according to claim 7, wherein the at least one property is water degradation.

9. A polymeric composite being formed of a composition according to any one of claims 1 to 6.

## Patentansprüche

1. Zusammensetzung, umfassend:
**A-** Poly(vinylalkohol) (PVOH) in einer Menge im Bereich zwischen 30 und 99 Gew.-%;
**B-** mindestens eine Vernetzungsverbindung, die in einer Menge im Bereich zwischen 0,1 und 20 Gew.-% vorhanden ist und aus Polymeren, Copolymeren und nichtpolymeren Materialien ausgewählt ist, welche jeweils eine Funktionalität haben, die zur Assoziierung mit dem PVOH fähig ist, wobei die Funktionalität eine Carboxylsäure ist, die aus Dicarboxylsäuren, Tricarboxylsäuren und höheren Homologen ausgewählt ist;
**C-** mindestens einen zusätzlichen Biokunststoff, der ein biologisch abbaubares Polymer in einer Menge im Bereich zwischen 0,1 und 50 Gew.-% ist, wobei der mindestens eine zusätzliche Biokunststoff aus Poly(ethylenoxid) (PEO), Poly(ethylenglycol) (PEG), Polycaprolacton (PCL), Poly(milchsäure) (PLA), Cellulose und Cellulosederivaten, Stärke, thermoplastischer Stärke (TPS), Chitosan und Polyhydroxyalkanoaten (PHAs) ausgewählt ist; und
**D-** optional mindestens einen Zusatzstoff in einer Menge im Bereich zwischen 0,1 und 20 Gew.-%.

2. Zusammensetzung gemäß Anspruch 1, wobei das Polymer eine Polysäure ist, die optional Poly(acrylsäure) (PAA) oder Poly(methacrylsäure) (PMAA) ist.

3. Zusammensetzung gemäß Anspruch 1, wobei die mindestens eine Vernetzungsverbindung ein Polymer mit Carboxylsäure-Funktionalitäten ist, wobei das Polymer optional aus Poly(ethylen-Co-Acrylsäure) (PE-co-AA), Poly(ethylen-Co-Methacrylsäure) (PE-co-MAA), Poly(lactidblock-Acrylsäure) (PLA-block-AA), PVOH mit Carboxylgruppen und Carboxymethylcellulose (CMC) ausgewählt ist.

4. Zusammensetzung gemäß Anspruch 1, wobei der mindestens eine Zusatzstoff aus anorganischen Zusatzstoffen, Füllstoffen, Verstärkungsmitteln, Prozesshilfsstoffen, Gleitmitteln, Lichtstabilisatoren, UV-Absorptionsstoffen, Flammschutzmitteln, antimikrobiellen, antiviralen Mitteln, Treibmitteln, Nukleierungsmitteln, Antioxidantien, Antiblockmitteln und Antistatikmitteln ausgewählt ist.

5. Zusammensetzung gemäß einem der Ansprüche 1 bis 4, wobei die Menge des PVOH, der mindestens einen Vernetzungsverbindung und des mindestens einen zusätzlichen Biokunststoffs dazu ausgewählt ist, den Abbau in Wasser eines aus der Zusammensetzung gebildeten Verbundmaterials zu modulieren, wobei der Abbau in Wasser mit einer Verringerung der Menge des mindestens einen zusätzlichen Biokunststoffs relativ zu der Menge des mindestens einen Vernetzungsmaterials angehalten oder verlangsamt oder verzögert wird, und wobei der mindestens eine zusätzliche Biokunststoff optional PEO ist.

6. Zusammensetzung gemäß Anspruch 1, wobei das PVOH in einer Menge zwischen 73 und 96,5, 68,5 und 89,8, 77,5 und 96,3, 67,5 und 91,5, 72 und 95, 71 und 85, 81 und 90, 68 und 81, 75 und 84, 60 und 78, 91,5 und 99,3, 87,5 und 98,7, 94,6 und 82,5, 87 und 93,3, 83 und 98,7, 78,5 und 94,3, 79,5 und 93,8, 68 und 93,5, 81,5 und 93,7, 73,5 und 93,3, 82 und 98,6 oder zwischen 77,5 und 98,2 Gew.-% vorhanden ist und die mindestens eine Vernetzungsverbindung in einer Menge von 0,1 - 1,5, 1,5 - 2,5, 1 - 2,5, 1,5 - 4, 1, 1,5 - 2, 1,5 - 2,5, 0,1 - 0,5, 0,5 - 2, 0,1 - 0,5 oder zwischen 1 und 2 Gew.-% und/oder der mindestens eine Biokunststoff in einer Menge zwischen 1,5 und 10, 5 und 10, 1,5 und 5, 1,5 und 4, 5, 2, 10, 0 und 1, 1 und 5, 5 und 10, 0,1 und 1 oder zwischen 0,1 und 1 Gew.-% vorhanden ist, und wobei die Zusammensetzung optional mindestens einen Zusatzstoff umfasst.

7. Verfahren zur Modifizierung mindestens einer Eigenschaft eines festen Verbundmaterials, das aus einer Zusammensetzung gemäß einem der Ansprüche 1 bis 6 gebildet ist, wobei das Verfahren umfasst: Behandeln einer Zusammensetzung, die eine Menge an PAA und eine Menge an PEO umfasst, mit einer Zusammensetzung, die eine Menge an PVOH und optional mindestens einen Zusatzstoff umfasst, wobei die Menge an PAA, die Menge an PEO und optional die Menge an PVOH ausgewählt ist zum Modifizieren der mindestens einen Eigenschaft unter Bedingungen, die eine Verbindung des PAA, PEO und PVOH und optional mindestens eines Zusatzstoffs zu dem festen Verbundmaterial mit der mindestens einen Eigenschaft zulassen.

8. Verfahren gemäß Anspruch 7, wobei die mindestens eine Eigenschaft der Abbau in Wasser ist.

9. Polymerverbundmaterial, das aus einer Zusammensetzung gemäß einem der Ansprüche 1 bis 6 gebildet ist.

## Revendications

1. Composition comprenant
**A-** l'alcool (polyvinylique) (PVOH) dans un volume compris entre 30 et 99 % en poids ;
**B-** au moins un composé de réticulation présent dans un volume variant entre 0,1 et 20 % en poids, et sélectionné parmi les polymères, les copolymères et les matériaux non-polymères, chacun possédant une fonctionnalité capable de s'associer au PVOH, dans laquelle ladite fonctionnalité est un acide carboxylique sélectionné parmi les acides dicarboxyliques, les acides tricarboxyliques et les homologues plus élevés ;
**C-** au moins un bioplastique supplémentaire qui est un polymère biodégradable dans un volume variant entre 0,1 et 50 % en poids, dans laquelle au moins l'un des bioplastiques supplémentaires est sélectionné parmi l'oxyde de poly(éthylène) (PEO), le poly(éthylène-glycol) (PEG), le polycaprolactone (PCL), l'acide poly(lactique) (PLA), la cellulose et les dérivés de la cellulose, l'amidon, l'amidon thermoplastique (TPS), le chitosane et les polyhydroxyalcanoates (PHAs) ; et
**D-** en option, au moins un additif dans un volume variant entre 0,1 et 20 % en poids.

2. Composition selon la revendication 1, dans laquelle le polymère est un polyacide étant en option de l'acide poly(acrylique) (PAA) ou de l'acide poly(méthacrylique) (PMAA).

3. Composition selon la revendication 1, dans laquelle au moins l'un des composés de réticulation est un polymère possédant des fonctionnalités d'acide carboxylique, le polymère étant sélectionné en option parmi l'acide poly(éthylène-co-acrylique) (PE-co-AA), l'acide poly(éthylène-co-méthacrylique) (PE-co-MAA), l'acide poly(lactide-bloc-acrylique) (PLA-bloc-AA), le PVOH avec des groupes carboxyliques et la cellulose carboxyméthylique (CMC).

4. Composition selon la revendication 1, dans laquelle au moins l'un des additifs est sélectionné parmi les additifs inorganiques, les charges, les agents de renforcement, les auxiliaires technologiques, les agents de glissement, les stabilisateurs de lumière, les absorbeurs d'UV, les agents ignifuges, antimicrobiens et antiviraux, les agents gonflants, les agents de nucléation, les antioxydants, les agents antiblocage et les agents antistatiques.

5. Composition selon une quelconque des revendications 1 à 4, dans laquelle la quantité du PVOH, d'au moins un composé de réticulation et d'au moins un bioplastique supplémentaire est sélectionnée afin de moduler la dégradation par l'eau d'un composite constitué de ladite composition, dans laquelle la dégradation par l'eau est arrêtée, ralentie ou retardée avec une réduction du volume dudit au moins l'un des bioplastiques supplémentaires par rapport à la quantité dudit au moins l'un des matériaux réticulants, et dans laquelle au moins l'un des bioplastiques supplémentaire est en option du PEO.

6. Composition selon la revendication 1, dans laquelle le PVOH est présent dans un volume entre 73 et 96,5, 68,5 et 89,8, 77,5 et 96,3, 67,5 et 91,5, 72 et 95, 71 et 85, 81 et 90, 68 et 81, 75 et 84, 60 et 78, 91,5 et 99,3, 87,5 et 98,7, 94,6 et 82,5, 87 et 93,3, 83 et 98,7, 78,5 et 94,3, 79,5 et 93,8, 68 et 93,5, 81,5 et 93,7, 73,5 et 93,3, 82 et 98,6 ou entre 77,5 et 98,2 % en poids ; et au moins l'un des composés de réticulation est présent dans un volume de 0,1 à 1,5, de 1,5 à 2,5, de 1 à 2,5, de 1,5 à 4, de 1, de 1,5 à 2, de 1,5 à 2, de 5, de 0,1 à 0,5, de 0,5 à 2, de 0,1 à 0,5 ou entre 1 et 2 % en poids ; et au moins l'un des bioplastiques est dans un volume entre 1,5 et 10, 5 et 10, 1,5 et 5, 1,5 et 4, de 5, de 2, de 10, 0 et 1, 1 et 5, 5 et 10, 0,1 et 1 ou entre 0,1 et 1 % en poids, et dans laquelle la composition comprend en option au moins un additif.

7. Procédé en vue de la modification d'au moins une propriété d'un matériau composite solide constitué d'une composition selon une quelconque des revendications 1 à 6, le procédé comprenant le traitement d'une composition comprenant un volume de PAA et un volume de PEO avec une composition comprenant un volume de PVOH et, en option, au moins un additif, dans lequel le volume de PAA, le volume de PEO et en option le volume de PVOH est sélectionné afin de modifier au moins une propriété, dans des conditions permettant la composition du PAA, du PEO et du PVOH, et, en option, au moins un additif, dans le composite solide possédant au moins une propriété.

8. Procédé selon la revendication 7, dans lequel au moins l'une des propriétés est la dégradation par l'eau.

9. Composite polymère étant constitué d'une composition selon une quelconque des revendications 1 à 6.
